Europäisches Patentamt

European Patent Office

Office européen des brevets

(11) Publication number: **0 214 766**
**A1**

(12) **EUROPEAN PATENT APPLICATION**

(21) Application number: **86306143.8**

(22) Date of filing: **08.08.86**

(51) Int. Cl.⁴: **A 01 G 9/14**
**A 01 G 13/04**

(30) Priority: **10.08.85 GB 8520132**

(43) Date of publication of application:
**18.03.87 Bulletin 87/12**

(84) Designated Contracting States:
**DE FR GB IT NL SE**

(71) Applicant: **Williams, Ivan Patrick**
**10 Hillside Ironbridge**
**Shropshire(GB)**

(72) Inventor: **Williams, Ivan Patrick**
**10 Hillside Ironbridge**
**Shropshire(GB)**

(74) Representative: **Hepworth, John Malcolm**
**J.M. Hepworth & Co. 36 Regent Place**
**Rugby Warwickshire CV21 2PN(GB)**

(54) Roofing structure for plant protection devices.

(57) A protection unit for plants and seeds comprises a roof panel (12), side walls (14, 16) and end walls (18, 20) extending downwardly from the roof panel thereby forming a hollow body, the roof panel being formed to provide a multiplicity of individual pockets (P) each to collect moisture. Each of the pockets has a base in which an aperture is formed, to permit moisture to pass through the roof panel in a controlled manner. The pockets are arranged in a plurality of rows (R) such as to ensure that moisture is distributed evenly over the area beneath the roof panel.

FIG.1

ROOFING STRUCTURE FOR PLANT PROTECTION DEVICES

- 1 -

This invention relates to a roofing structure for plant protection devices e.g. garden cloches.

Whereas the invention is particularly concerned with a garden cloche, the specific roofing structure may be used per se and supported above plants and/or seeds by some suitable means.

One aspect of the invention provides a roofing structure for a plant protection device which roofing structure comprises a panel formed to provide a multiplicity of individual pockets each to collect moisture and means provided in at least some of the pockets to permit moisture to pass through the panel in a controlled manner.

Another aspect of the invention provides a plant and/or seed protection unit which unit has a roof at least a portion of which is formed as defined in the immediately preceding paragraph.

The pockets collect moisture e.g. rain, water or artificially applied water and apertures provided in the base of the pockets allow for the controlled distribution of collected water to the area beneath the
roofing structure.

The distribution of apertured pockets in the roofing
structure according to the invention is such as to keep
a degree of moisture distribution on the under-surface
of the roofing structure which will provide, in the
case of a cloche or other substantially closed unit, a
humid atmosphere.  The pocket apertures further provide
ventilation in periods when the pockets do not contain
moisture in order to reduce the risk of 'damping off'
of plants.

An embodiment of the invention will now be described by
way of example, with reference to the accompanying
drawings in which:-

FIGURE 1 is a perspective view of a garden cloche
incorporating a roofing structure according to the
invention; and

FIGURE 2 is a cross-sectional view of the cloche taken
along the line II-II in Figure 1.

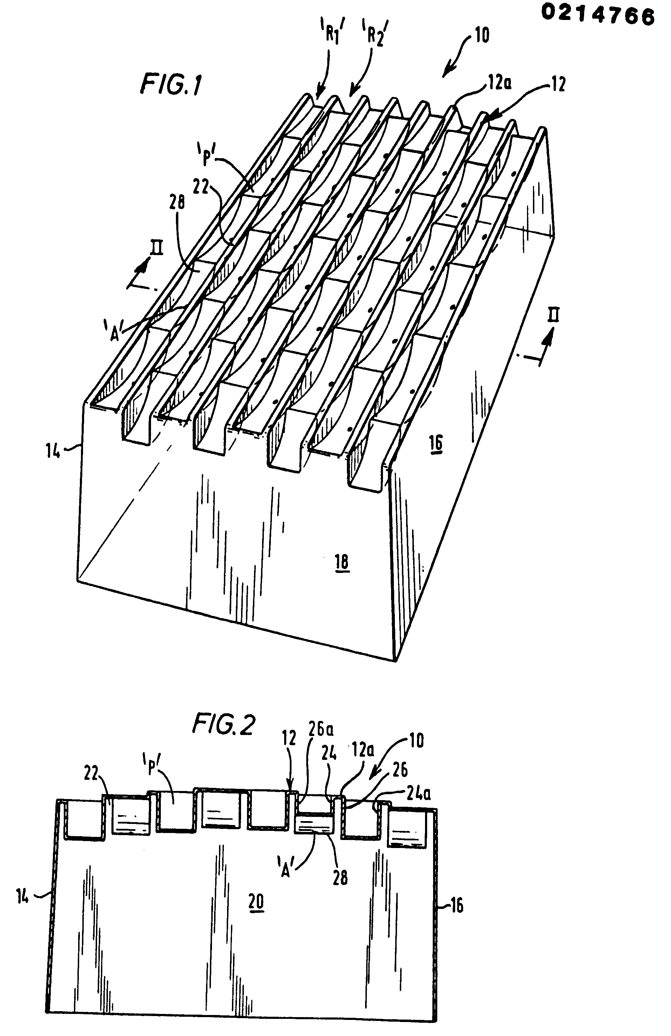

Referring to Figures 1 and 2, there is shown a garden
cloche 10 which is moulded e.g. by vacuum forming from
a suitable plastics material e.g. polystyrene; p.v.c.
so as to be self-supporting.

The cloche comprises a hollow body having a roof 12
from which depend integral, opposed side walls 14 and
16 and integral opposed end walls 18, 20 respectively
whereas the hollow body of this embodiment is generally
parallelapiped, other shapes e.g. cylindrical, frusto-
conical are envisaged.

The roof 12 is formed with a multiplicity of similar
pockets 'P' arranged in a series of parallel rows 'R'.

In the particular arrangement illustrated the pockets P of one row e.g. R' are staggered out of registry with the pockets P of the adjacent row e.g. R². The rows of pockets are separated one from the next by an inverted channel-shaped portion 22 of the roof. The channel-shaped portions are each defined by a top wall 12a forming a part of the uppermost surface of roof 12 and continuous flank walls 24, 26 extending the length of the roof and providing one side of each of the pockets in adjacent rows. Each pocket 'P' is thereby formed by a pair of flank walls 24, 26 of adjacent channel-shaped portions and a base 28 which is arcuate in the longitudinal direction of the cloche. At the lowermost location of the arcuate base 28 each pocket is formed with an aperture 'A'.

Each of the pockets 'P' is provided for the collection and temporary retention of moisture which is gravity fed through the base 28 of the pocket by an aperture 'A' provided at the lowermost location in the pocket base. It is envisaged that slots and/or a plurality of apertures may be provided. The specific arrangement of the aperture or apertures is unimportant except insofar as the function of providing a controlled means of escape of moisture from the pocket to the inside of the cloche is achieved.

In a modified construction, it is envisaged that the moisture collection pockets may be provided in substantially the whole surface area of the cloche which could therefore be of semi-cylindrical form in which case the roof also incorporates the side walls of the cloche. In such an arrangement the pockets may be formed by successive longitudinal folds of material. A cloche constructed in the modified form is not necessarily self-supporting and structural reinforcement e.g. rigid hoops may be required to maintain the structural rigidity of the cloche.

It is also envisaged that the pockets may incorporate value means for more specifically controlling the distribution of moisture to the area beneath the cloche. For example, each pocket may be furnished with a control valve comprising a bung connected by a spigot passing through projection and connected at its opposite end to a bi-metallic strip. The bi-metallic strip controls opening and closing of the bung and is carried by a suitable structural element mounted internally of the cloche. A pair of spaced ducts passing one on either side of the bi-metallic stip may be provided to allow moisture to pass through the pocket such that moisture does not contact and thereby cool the strip.

It is further envisaged that a cloche assembly may comprise a height adjustable base frame, a flexible plastics sleeve and a cloche top which may take the form of the hollow body depicted in Figures 1 and 2. The plastics sleeve is fitted about the base frame in some suitable manner and upright legs of the frame are made adjustable e.g. telescopically to collapse or stretch the sleeve respectively. The cloche top sits atop the upright legs of the base frame. Thus the height of the cloche assembly may be adjustable to accommodate plants as they grow.

In any of the constructions described above it is envisaged that an inner screen may be provided within the cloche intermediate the roof and the ground which screen can be formed from plastics material or tightly stretched muslin to protect seedlings from droplets of water falling from the apertured pockets.

It is also envisaged that one for more receptacles e.g. a trough containing impure or saline water may be accommodated within a cloche or beneath a roofing structure according to the invention. Moisture from such receptacles will under appropriate conditions evaporate condense on the underside of the roofing structure whereafter it is redistributed over the area covered by the roofing structure in the form of droplets of water substantially cleansed of the original impurities which are left remaining in the water trough or other receptacle utilised.

It will be appreciated that a roofing structure of the present invention when applied so as to form a part of a substantially closed housing functions to produce evaporation, condensation and thence redistribution of moisture back to plants or seeds contained within the closed housing thereby providing a "mini-tropical rain forest climate". The specific arrangement of the pockets allows for even distribution of moisture both directly from the pockets themselves and also from the condensate which collects on the underside of the pockets and other areas of the roof.

CLAIMS

- 6 -

1. A roofing structure for a plant protection device (10) which structure is characterised by a panel (12) formed to provide a multiplicity of individual pockets (P) each to collect moisture, moisture transfer means (A) being provided in at least some of the pockets to permit moisture to pass through the panel in a controlled manner so that it is distributed substantially evenly over the area beneath said roof panel.

2. A roofing structure according to claim 1, further characterised in that said transfer means comprises at least one aperture provided in each pocket.

3. A roofing structure according to claim 2, further characterised in that said pockets are arranged in a plurality of rows (R) in which the pockets in one row are staggered out of registry with the pockets in the next adjacent row.

4. A roofing structure according to claim 3, further characterised in that said rows of pockets are separated one from the next by an inverted channel-shaped portion of the said roof panel, each of said inverted channel shaped portions being defined by a top wall (12a) forming a part of the uppermost surface of said roof panel and continuous flank walls (24, 26) extending the length of said roof panel and providing one side of each of the pockets in adjacent rows.

5. A roofing structure according to claim 4, further characterised in that each pocket has an arcuate base, said aperture being formed in the lowermost location of said arcuate base.

6. A protection unit for plants and seeds which unit is characterised by a roof panel at least a portion of which is formed as claimed in claim 1.

7. A protection unit according to claim 6, characterised in that said roof panel is height adjustable.

8. A protection unit for plants and seeds which unit comprises a roof panel (12), side walls (14, 16) and end walls (18, 20) extending downwardly from said roof panel thereby forming a hollow body, characterised in that said roof panel is formed to provide a multiplicity of individual pockets (P) each to collect moisture, each pocket having a base in which an aperture is formed to permit moisture to pass through said roof panel in a controlled manner and in that said pockets are arranged in a plurality of rows (R) in which the pockets in one row are staggered out of registry with the pockets in the next adjacent row whereby, in use, moisture is distributed evenly over the area beneath the roof panel.

0214766

FIG.1

FIG.2

## DOCUMENTS CONSIDERED TO BE RELEVANT

| Category | Citation of document with indication  where appropriate, of relevant passages | Relevant to claim | CLASSIFICATION OF THE APPLICATION (Int Cl 4) |
|---|---|---|---|
| Y | GB-A-2 128 651  (VASBENTER) <br> * Page 1, lines 96-108;  page  2, lines 16-32; figures 1,3 * | 1-8 | A 01 G    9/14 <br> A 01 G   13/04 |
| | --- | | |
| Y | GB-A-1 580 934  (SALT) <br> * Whole document * | 1-8 | |
| | --- | | |
| A | FR-A-2 485 330  (LEFEBVRE) <br><br> *  Page  2,  lines 41-68; figures 1-4 * | 1-3,5, 6,8 | |
| | ----- | | |

**TECHNICAL FIELDS SEARCHED (Int Cl 4)**

A 01 G

The present search report has been drawn up for all claims

| Place of search <br> THE HAGUE | Date of completion of the search <br> 18-11-1986 | Examiner <br> HERYGERS J.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82